# EUROPEAN PATENT APPLICATION

(11) **EP 3 103 732 A1**
(43) Date of publication of application: **14.12.2016**
(21) Application number: 15170942.5
(22) Date of filing: 08.06.2015
(51) Int. Cl.: B65B 25/02, A01G 5/02, B65B 41/00

(54) **APPARATUS FOR TYING TOGETHER A BUNDLE OF CUT FLOWERS**

(71) Applicant: Bercomex B.V., 1624 PB Hoorn (NL)
(72) Inventor: WAGENAAR, Robér Bernardus Jozef, 1696 BD Oosterblokker (NL)
(74) Representative: De Vries & Metman

(57) **Abstract**

An apparatus for tying together a bundle of cut flowers with an elongate elastic tying material comprises a tying unit intended for pulling in and tying an amount of the elongate elastic tying material around said bundle, a storage unit for holding a reel having wound thereon a stock of said elongate elastic tying material and a guiding assembly intended for guiding the elongate elastic tying material from the storage unit towards the tying unit. The storage unit defines a central shaft for receiving thereon the reel, which is oriented such that the guiding assembly is capable of unwinding and removing the elongate elastic tying material from the reel in a removal direction substantially in parallel to said central shaft. The storage unit is provided with a restraining member intended for, with a restraining force, engaging at least a forward circumferential rim, as considered in said removal direction, of the stock of said elongate elastic tying material wound on the reel.

## Description

The invention relates to an apparatus for tying together a bundle of cut flowers with an elongate elastic tying material, comprising a tying unit intended for pulling in and tying an amount of the elongate elastic tying material around said bundle, a storage unit for holding a reel having wound thereon a stock of said elongate elastic tying material and a guiding assembly intended for guiding the elongate elastic tying material from the storage unit towards the tying unit, wherein the storage unit defines a central shaft for receiving thereon the reel.

In a known apparatus of this type the stock of elongate elastic tying material wound on the reel generally will have a length of around 1 km and the orientation of the central shaft with respect to the guiding assembly is such that the elongate elastic tying material will be wound of tangentially (in a direction substantially perpendicularly to the central shaft) while rotating the reel. When applied in a processing line for cut flowers the stock of elongate elastic tying material on the reel will run out every few hours, requiring the processing line to be stopped to replace the old empty reel by a new full reel.

It is an object of the present invention to provide an improved apparatus of the present type.

Thus, in accordance with the present invention said apparatus is characterized in that the central shaft is oriented such that the guiding assembly is capable of unwinding and removing the elongate elastic tying material from the reel in a removal direction substantially in parallel to said central shaft and wherein the storage unit is provided with a restraining member intended for, with a restraining force, engaging at least a forward circumferential rim, as considered in said removal direction, of the stock of said elongate elastic tying material wound on the reel.

Whereas in the state of the art apparatus the relative orientation between the central shaft (and thus the reel mounted thereon) and the guiding assembly hinders the use of larger reels (reels with a larger stock of tying material wound thereon), for example because the force required to rotate the reel for winding off the tying material becomes too large due to the increased mass and moment of inertia of the reel (with stock of tying material), in accordance with the present invention a rotation of the reel is not necessary during winding off and a larger reel (supporting a larger stock of tying material, for example up to 5 km) may be used. As a consequence a change of reel has to occur less frequently and stopping times (with consequent loss of production) can be reduced.

However, the change of direction in which the elongate elastic tying material is wound off from the reel (from tangentially and perpendicularly to the central shaft according to the state of the art to in parallel to the central shaft in accordance with the present invention) also effects the behaviour of the tying material during said winding off. Because the elongate elastic tying material originally is wound on such a reel in a slightly stretched and tensioned state, during winding off the spring-back of the elastic tying material appears to cause an uncontrolled winding off of the tying material (as a result of the energy released by the spring-back of the tying material to a less stretched state), resulting in a slack of tying material which has a detrimental effect on the operation of the apparatus, such as for example the guiding assembly thereof. For preventing such an uncontrolled winding off the restraining member is provided which at said forward circumferential rim will engage the tying material which is being wound off and as a result stops any uncontrolled winding off of the tying material. Only when the tying unit (which generally operates in a step-by-step fashion) again requires the supply of an amount of tying material through the guiding assembly, the tying material is pulled free from the restraining member and an amount of tying of tying material is wound off until it again is restrained by the restraining member.

In one embodiment the restraining member is a longitudinally tensioned flexible elongate member having a central part intended for extending substantially in parallel to said central shaft and two opposite (first and second) outer parts, of which at least the first outer part is intended for extending inwardly from said forward circumferential rim.

In such an embodiment both said central part and the junction between said central part and said first outer part will play an important role in restraining the elongate elastic tying material.

Further, it is possible then that the second outer part correspondingly is intended for extending inwardly from a rearward circumferential rim of the stock of said elongate elastic tying material wound on the reel. This may contribute to improving the effectiveness of the restraining member over a wide range of diameters of the reel with tying material wound thereon.

In one embodiment the flexible elongate member is longitudinally tensioned by a gravity-loaded mass attached to at least one of the outer parts. The advantage of using a gravity-loaded mass is the fact that the resulting tension in the restraining member, and thus the restraining effect realised, is substantially independent from the diameter of the reel with tying material wound thereon. Thus the effect will substantially remain constant when tying material is wound of from the reel.

It is conceivable that the magnitude of the mass can be changed, for example by adding or removing weights.

In one embodiment, then, the other outer part may be attached to a stationary part of the apparatus. For example, the guiding assembly may comprise an eyelet positioned, as considered in said removal direction, in front of the central shaft for guiding the elongate flexible tying material, wherein said eyelet also functions as the stationary part to which the first outer part of the flexible elongate member is attached. In such an embodiment the eyelet therefore has two functions.

It is possible that the flexible elongate member is a rope. The specific features of the flexible elongate member among others may be determined by factors such as characteristics of the elongate elastic tying material and the speed with which the tying material is unwound from the reel.

In yet another embodiment of the apparatus according to the present invention the storage unit comprises a tubular cover surrounding the central shaft and defining between itself and the central shaft a substantially annular space intended for receiving said reel. The dimensions of the tubular cover should be sufficient for allowing the annular space to receive a new full reel with predetermined diameter. The tubular cover may help in preventing uncontrolled movements of the amount of tying material being wound off from the reel.

In a specific embodiment of the apparatus according to any of the previous claims, the guiding assembly comprises a drum mounted for a rotation on a shaft extending substantially perpendicularly to a local direction of movement of the elongate elastic tying material, which drum is intended for there around receiving at least one winding of said elongate elastic tying material and wherein a brake member is provided which is movable between an operative position engaging said drum when the tying unit is not pulling in an amount of the elongate elastic tying material and an inoperative position disengaging said drum when the tying unit is pulling in an amount of the elongate elastic tying material.

It is possible that the shaft for the drum is the same shaft as used to mount a reel in a state of the art apparatus and that the brake member is devised in accordance with a brake member of such a state of the art apparatus. In accordance with the present invention, however, the drum replaces the reel on said shaft and is used to control the movement of the tying material.

In one embodiment of the apparatus the reel with the stock of elongate elastic tying material wound thereon tapers conically in said removal direction. This may have a beneficial effect on the manner in which the tying material is wound off from the reel.

Hereinafter the invention will be elucidated while referring to the drawings, in which
Figure 1 in a perspective view shows an embodiment of the apparatus according to the present invention;
Figure 2 shows another perspective view of the apparatus according to figure 1, and
Figure 3 on a larger scale and schematically shows a detail of the apparatus according to figure 1.

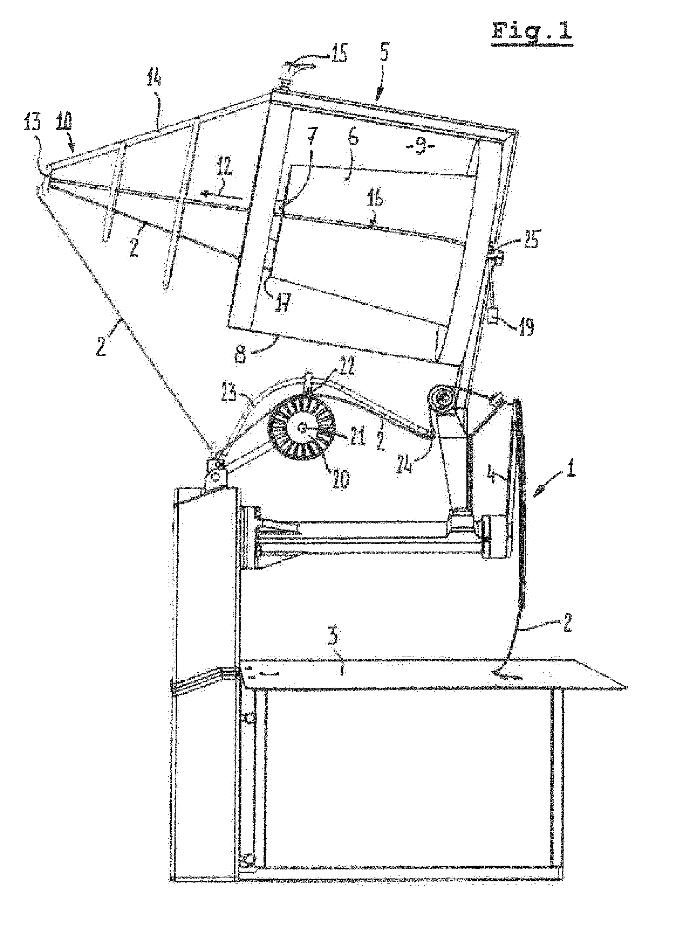

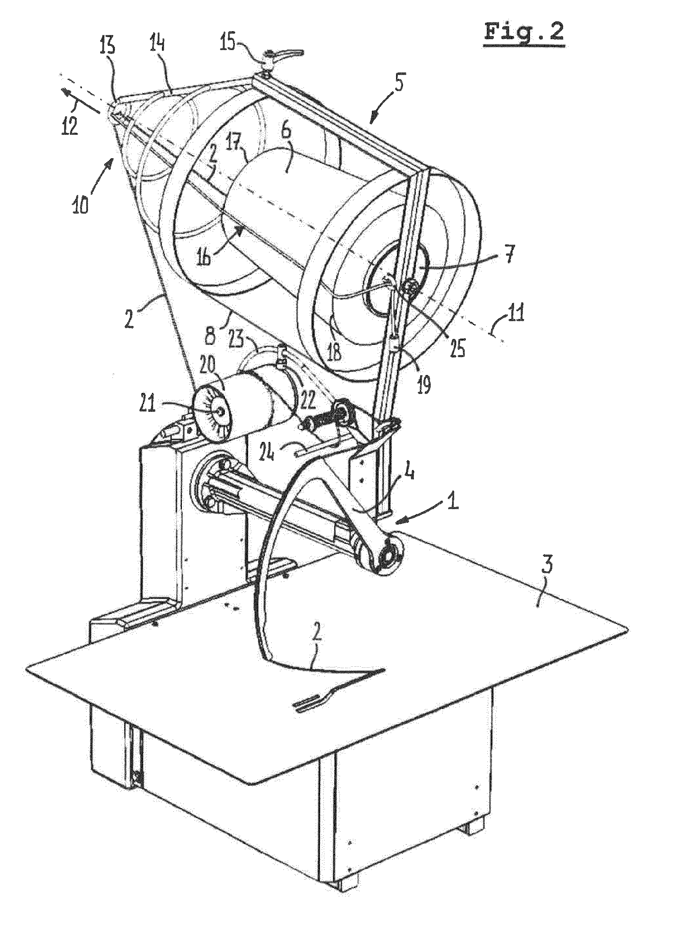

An embodiment of an apparatus according to the invention for tying together a bundle of cut flowers with an elongate elastic tying material is illustrated in two different perspective views in figures 1 and 2. The apparatus comprises a tying unit 1 intended for pulling in and tying an amount of the elongate elastic tying material 2 around said bundle. In the figures such a bundle (not illustrated) by conveying means not shown but known per se is supplied over a table 3. The manner in which the tying unit 1 operates (among others using an arm 4 which in a reciprocating manner rotates and which guides said tying material 2 around such a bundle in cooperation with means not visible which are located below the surface of the table 3) is known per se and therefore is not further elucidated here.

The apparatus further is provided with a storage unit 5 for holding a reel 6 having wound thereon a stock of said elongate elastic tying material 2. The storage unit 5 defines a central shaft 7 for receiving thereon the reel 6. The storage unit 5 further is provided with a tubular cover 8 (in the present embodiment partly made of transparent material for offering the possibility to inspect the reel 6 for checking the amount of tying material 2 still present on the reel 6 and thus determining the moment of replacing the reel 6 by a new reel) surrounding the central shaft 7 (preferably concentrically therewith) and defining between itself and the central shaft 7 a substantially annular space 9 intended for receiving said reel 6 with tying material 2 wound onto it.

The apparatus also comprises a guiding assembly 10 intended for guiding the elongate elastic tying material 2 from the storage unit 5 towards the tying unit 1. Details of this guiding assembly 10 will appear below.

The central shaft 6 is oriented such (as indicated by a broken line 11 in figure 2) that the guiding assembly 10 is capable of unwinding and removing the elongate elastic tying material 2 from the reel 6 in a removal direction 12 substantially in parallel to said central shaft 6. The guiding assembly 10 comprises an eyelet 13 positioned, as considered in said removal direction 12, in front of the central shaft 6 for guiding the elongate flexible tying material 2 which is wound off from the reel 6. The eyelet 13 is part of a frame 14 which by means of a releasable connection 15 may be pivoted to a position in which a reel 6 may be supplied into or taken away from the annular space 9 (for example for replacing an empty reel by a new one).

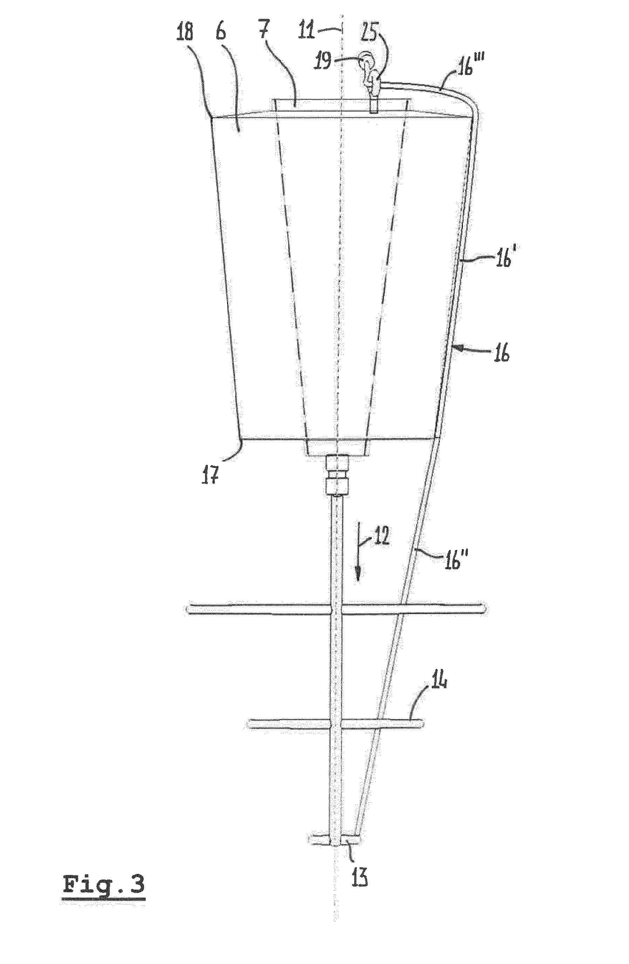

As best seen in figure 3 (which schematically shows a top plan view of the reel 6 on a larger scale) the reel 6 with the stock of elongate elastic tying material 2 wound thereon tapers conically in the removal direction 12.

The storage unit 5 is provided with a restraining member 16 intended for, with a restraining force, engaging at least a forward circumferential rim 17, as considered in said removal direction 12, of the stock of said elongate elastic tying material 2 wound on the reel 6. Referring too to figure 3, said restraining member 16 is a longitudinally tensioned flexible elongate member (for example a rope) having a central part 16' intended for extending substantially in parallel to said central shaft 7 (however in correspondence with the taper), a first outer part 16" which is intended for extending inwardly from said forward circumferential rim 17 and an opposite second outer part 16'" which (in the illustrated embodiment) extends inwardly from a rearward circumferential rim 18 of the stock of said elongate elastic tying material 2 wound on the reel 6.

The first outer part 16" is attached to the eyelet 13, and suspended to the second outer part 16'" (which extends around a guide part 25) is a gravity-loaded mass 19 (only visible in figures 1 and 2) such that the flexible elongate restraining member 16 is longitudinally tensioned. In a manner not illustrated the magnitude of the mass 19 can be changed (for example by removing or adding small weights).

During operation of the apparatus the elongate elastic tying material 2, as a result of the operation of the tying unit 1, is wound off from the reel 6 (basically in parallel to the central shaft 7 in said removal direction 12). Because the elongate elastic tying material 2 originally is wound on the reel 6 in a slightly stretched and tensioned state, during winding off the spring-back of the elastic tying material 2 often would try to cause an uncontrolled winding off of the tying material 2 (as a result of the energy released by the spring-back of the tying material to a less stretched state), resulting in a slack of tying material 12 between the storage unit 5 and the tying unit 1. Also a slack of tying material could be formed around the reel 6. Such a slack could have a detrimental effect on the operation of several parts of the apparatus in general (for example on the guiding assembly 10 in special) and there would be a risk that such a slack of tying material 2 gets entangled with other parts of the apparatus or with surrounding equipment.

For preventing such an uncontrolled winding off the restraining member 16 is provided which at said forward circumferential rim 17 of the reel 6 will engage the tying material 2 which is being wound off, and the restraining member 16 as a result stops any uncontrolled winding off of the tying material 2. Only when the tying unit 1 again requires the supply of an amount of tying material 2 through the guiding assembly 10 (which process occurs step by step due to the intermittent operation of such a tying unit 1), the tying material 2 is pulled free from the restraining member 16 and an amount of tying of tying material 2 is wound off until it again is restrained by the restraining member 16.

During such a process also the cover 8 may help in preventing uncontrolled movements of the tying material 2 being wound off from the reel 6.

Apart from the above mentioned components, the illustrated embodiment of the apparatus according to the present invention, as a part of the guiding assembly, further comprises a drum 20 mounted for a rotation on a shaft 21 extending substantially perpendicularly to a local direction of movement of the elongate elastic tying material 2. Said drum 20 is intended for there around receiving at least one winding of said elongate elastic tying material 2. Further a brake member 22 is provided which (being mounted on a hingeable arm 23 which at a free end carries a guide roll 24 for the tying material 2) is movable between an operative position engaging said drum 22 when the tying unit 1 is not pulling in an amount of the elongate elastic tying material 2 and an inoperative position disengaging said drum 20 when the tying unit 1 is pulling in an amount of the elongate elastic tying material 2 (and this tying material 2 through the guide roll 24 lifts the arm 23 at its free end). The combination of such a drum 20 with brake member 22 also is beneficial in an optimization of the manner in which the elongate elastic tying material 2 is guided and supplied to the tying unit 1.

It is noted that the shaft 21 of the drum 20 may be the same shaft which in a state of the art apparatus carries a reel for supplying tying material to the tying unit.

The invention is not limited to the embodiments described before which may be varied widely within the scope of the invention as defined by the appending claims.

## Claims

1. Apparatus for tying together a bundle of cut flowers with an elongate elastic tying material, comprising a tying unit intended for pulling in and tying an amount of the elongate elastic tying material around said bundle, a storage unit for holding a reel having wound thereon a stock of said elongate elastic tying material and a guiding assembly intended for guiding the elongate elastic tying material from the storage unit towards the tying unit, wherein the storage unit defines a central shaft for receiving thereon the reel, **characterized in that** the central shaft is oriented such that the guiding assembly is capable of unwinding and removing the elongate elastic tying material from the reel in a removal direction substantially in parallel to said central shaft and wherein the storage unit is provided with a restraining member intended for, with a restraining force, engaging at least a forward circumferential rim, as considered in said removal direction, of the stock of said elongate elastic tying material wound on the reel.

2. Apparatus according to claim 1, wherein the restraining member is a longitudinally tensioned flexible elongate member having a central part intended for extending substantially in parallel to said central shaft and two opposite (first and second) outer parts, of which at least the first outer part is intended for extending inwardly from said forward circumferential rim.

3. Apparatus according to claim 2, wherein the second outer part correspondingly is intended for extending inwardly from a rearward circumferential rim of the stock of said elongate elastic tying material wound on the reel.

4. Apparatus according to claim 2 or 3, wherein the flexible elongate member is longitudinally tensioned by a gravity-loaded mass attached to at least one of the outer parts.

5. Apparatus according to claim 4, wherein the magnitude of the mass can be changed.

6. Apparatus according to claim 4 or 5, wherein the other outer part is attached to a stationary part of the apparatus.

7. Apparatus according to claim 6, wherein the guiding assembly comprises an eyelet positioned, as considered in said removal direction, in front of the central shaft for guiding the elongate flexible tying material and wherein said eyelet also functions as the stationary part to which the first outer part of the flexible elongate member is attached.

8. Apparatus according to any of the claims 2-7, wherein the flexible elongate member is a rope.

9. Apparatus according to any of the previous claims, wherein the storage unit comprises a tubular cover surrounding the central shaft and defining between itself and the central shaft a substantially annular space intended for receiving said reel.

10. Apparatus according to any of the previous claims, wherein the guiding assembly comprises a drum mounted for a rotation on a shaft extending substantially perpendicularly to a local direction of movement of the elongate elastic tying material, which drum is intended for there around receiving at least one winding of said elongate elastic tying material and wherein a brake member is provided which is movable between an operative position engaging said drum when the tying unit is not pulling in an amount of the elongate elastic tying material and an inoperative position disengaging said drum when the tying unit is pulling in an amount of the elongate elastic tying material.

11. Apparatus according to any of the previous claims, wherein the reel with the stock of elongate elastic tying material wound thereon tapers conically in said removal direction.
